(19) Europäisches Patentamt European Patent Office Office européen des brevets

(11) **EP 4 768 137 A1**

(12) **EUROPEAN PATENT APPLICATION**
published in accordance with Art. 153(4) EPC

(43) Date of publication:
**01.07.2026 Bulletin 2026/27**

(21) Application number: **24889114.5**

(22) Date of filing: **06.11.2024**

(51) International Patent Classification (IPC):
**B05C 5/02** (2006.01)   **B05C 11/10** (2006.01)
**H01M 4/04** (2006.01)   **H01M 10/42** (2006.01)

(52) Cooperative Patent Classification (CPC):
**B05C 5/02; B05C 11/10; H01M 4/04; H01M 10/42;**
**Y02E 60/10**

(86) International application number:
**PCT/KR2024/017383**

(87) International publication number:
**WO 2025/100927 (15.05.2025 Gazette 2025/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **09.11.2023 KR 20230154675**

(71) Applicant: **LG Energy Solution, Ltd.**
**Seoul 07335 (KR)**

(72) Inventor: **PARK, Joon Sun**
**Daejeon 34122 (KR)**

(74) Representative: **Plasseraud IP**
**104 Rue de Richelieu**
**CS92104**
**75080 Paris Cedex 02 (FR)**

(54) **DOUBLE SLOT DIE COATER HAVING EXCELLENT UNIFORMITY OF INSULATION COATING THICKNESS, ELECTRODE MANUFACTURING METHOD USING SAME, AND ELECTRODE**

(57)   The present disclosure relates to a dual slot die coater in which the width of the upper insulating liquid discharge flow path and the width of the lower insulating liquid discharge flow path are formed differently, thereby preventing the occurrence of fat-edge at the end of the insulating layer and enabling the formation of a uniform insulating layer.

【FIG. 5】

## Description

[Technical Field]

This application claims the benefit of priority from Korean Patent Application No. 10-2023-0154675, filed on November 09, 2023, the disclosures of which are incorporated herein by reference.

The present disclosure relates to a dual slot die coater with improved insulating coating thickness uniformity, an electrode manufacturing method using the same, and an electrode, and more particularly to a dual slot die coater with a novel coater shim design.

[Background]

Lithium secondary batteries are used as energy sources for various electronic devices, and as technology develops, there is a growing need for batteries that can deliver greater capacity compared to conventional batteries in the same space or design.

One of the main research challenges in these secondary batteries is to improve safety. The main cause of safety-related accidents in batteries is the abnormal high-temperature state resulting from a short circuit between the positive and negative electrodes. In other words, in normal situations, a separator is positioned between the positive and negative electrodes to maintain electrical insulation, but conventional separators show limitations in abnormal situations such as when the battery is overcharged or over-discharged, when internal short circuits occur due to dendritic growth of electrode materials or foreign materials, when sharp objects such as nails or screws penetrate the battery, or when excessive deformation is applied to the battery by external forces. Various methods have been attempted to reduce the possibility of electrode short circuits under such external impact or high-temperature conditions. For example, to solve internal short circuits in the battery, methods have been proposed such as attaching insulating tape to the uncoated part of the electrode and part of the active material layer, or forming an insulating layer by coating insulating liquid.

Meanwhile, attempts continue to form a bilayer structure of the electrode active material layer as one way to increase the loading amount of active material in the electrode. In the process of forming a bilayer structure of the electrode active material layer on both sides of the current collector, a problem of uniformity of the insulating layer arises. Specifically, a top coating process of coating the front surface of the current collector is followed by a back coating process of coating the back side of the current collector. Particularly, during the back coating process, fat edges mainly occur in the insulating layer. The back coating process has the limitation that the gap adjustment during coating is relatively inconsistent because the back coating process is performed in a manner that the current collector with the front surface already coated with electrode active material passes over the coating roll. As a result, the insulating liquid application in the back coating process becomes non-uniform, and as the insulating liquid shrinks during the drying process, a fat edge phenomenon is induced in the insulating layer.

Therefore, there is a need for novel technology development that can form a uniform insulating layer while forming a bilayer structure of the electrode active material.

[Summary]

[Technical Problem]

Accordingly, the present disclosure is directed to provide a dual slot die coater capable of preventing the occurrence of a fat-edge at the end of an insulating layer, particularly at the end of an insulating layer of a back coating layer, and forming a uniform insulating layer, an electrode manufacturing method using the same, and an electrode.

[Technical Solution]

To solve the above problem, a dual slot die coater according to the present disclosure has a structure in which average widths of insulating liquid discharge flow paths formed in upper and lower layers are designed to be different.

The dual slot die coater according to the present disclosure includes a lower block, a middle block, and an upper block; a first coating shim positioned between the lower and middle blocks; and a second coating shim positioned between the middle and upper blocks. The first and second coating shims each include an electrode slurry discharge flow path for discharging an electrode slurry; and an insulating liquid discharge flow path for discharging insulating liquid, formed on one side or both sides of the electrode slurry discharge flow path with being spaced apart from the electrode slurry discharge flow path by a certain distance.

For example, the dual slot die coater satisfies the following condition 1:

$$[\text{Condition 1}]$$

$$0.2 \le D2/D1 \le 0.8$$

wherein in the above condition 1,

D1 represents the average width (mm) of the insulating liquid discharge flow path formed in the first coating shim, and
D2 represents the average width (mm) of the insulating liquid discharge flow path formed in the second coating shim.

In the present disclosure, the first and second coating shims satisfy the following condition 2:

[Condition 2]

$$1 \leq |D1\text{-}D2| \leq 10 \ (mm)$$

wherein in the above condition 2,

D1 represents the average width (mm) of the insulating liquid discharge flow path formed in the first coating shim,
D2 represents the average width (mm) of the insulating liquid discharge flow path formed in the second coating shim.

In a specific example, the D2 is in a range of 1 mm to 10 mm.

In the present disclosure, each insulating liquid discharge flow path formed in the first and second coating shims is formed with being spaced apart by a distance D from one side or both sides of the electrode slurry discharge flow path. For example, the distance D is in a range of 1 mm to 5 mm.

Moreover, the present disclosure provides a method for manufacturing an electrode using the dual slot die coater described above.

The electrode manufacturing method according to the present disclosure includes a top coating step of coating an electrode slurry and an insulating liquid on one side of a current collector sheet; and a back coating step of coating an electrode slurry and an insulating liquid on the opposite side of the current collector sheet.

At least one of the top coating step and the back coating step include a first layer forming step of discharging a first electrode slurry and a first insulating liquid respectively through a first coating shim on the current collector sheet; and a second layer forming step of discharging a second electrode slurry and a second insulating liquid respectively through a second coating shim on the current collector sheet.

In the present disclosure, an average width D1' of a first insulating layer formed by discharging the first insulating liquid and an average width D2' of a second insulating layer formed by discharging the second insulating layer formed by discharging the second insulating liquid satisfies the following condition 3:

[Condition 3]

$$0.2 \leq D2'/D1' \leq 0.8$$

wherein in the above condition 3,

D1' represents the average width (mm) of the first insulating layer,
D2' represents the average width (mm) of the second insulating layer.

The first layer forming step and the second layer forming step can be performed by a single process.

The electrode manufacturing method according to the present disclosure includes a top coating step of coating an electrode slurry and an insulating liquid on one side of a current collector sheet; and a back coating step of coating an electrode slurry and an insulating liquid on an opposite side of the current collector sheet. For example, the top coating step and the back coating step each independently include the first layer forming step and the second layer forming step described above.

In the present disclosure, an average width D1' of the first insulating layer formed by discharging the first insulating liquid and an average width D2' of the second insulating layer formed by discharging the second insulating liquid satisfies the following condition 4:

[Condition 4]

$$1 \leq |D1'\text{-}D2'| \leq 10 \ (mm)$$

wherein in the above condition 4,

D1' represents the average width (mm) of the first insulating layer,
D2' represents the average width (mm) of the second insulating layer.

The insulating liquid used in the electrode manufacturing method according to the present disclosure may include inorganic particles. For example, the first insulating liquid, based on solid content, does not contain inorganic particles or contains inorganic particles of 30 wt.% or less. The second insulating liquid, based on solid content, comprises inorganic particles in a range of 30 wt.% to 95 wt.%.

In addition, the present disclosure provides an electrode manufactured through the manufacturing method described above. Specifically, the electrode is an electrode for a secondary battery. The electrode according to the present disclosure includes a top coating layer formed on one side of an electrode current collector, comprising a top side electrode active material layer and a top side insulating layer formed in an edge region of the top side electrode active material layer; and a back coating layer formed on the opposite one side of the electrode current collector, comprising a back side electrode active material layer and a back side insulating layer formed in an edge region of the back side electrode active material layer. Here, the top side insulating layer has a calculated value according to the following condition 5 in a range of 1 to 1.15, and the back side insulating layer has a calculated value according to the following condition 5 in a range of 1.15 to 1.5.

[Condition 5]

$$H_{Edge}/H_{Ever}$$

wherein in the above condition 5,

$H_{Ever}$ represents an average height ($\mu$m) in a region of the insulating layer having a height of 25 $\mu$m or more from the electrode current collector,
$H_{Edge}$ represents the height ($\mu$m) of the point with the highest height from the electrode current collector in a terminal region located on the opposite side of the region where the insulating layer contacts the electrode active material layer of the insulating layer.

In one example, the top side insulating layer and the back side insulating layer satisfy the following condition 6:

[Condition 6]

$$0.65 \leq S^f_{Top} / S^f_{Back} \leq 0.95$$

wherein in the above condition 6,

$S^f_{Top}$ represents the coating uniformity of the top side insulating layer,
$S^f_{Back}$ represents the coating uniformity of the back side insulating layer.
$S^f_{Top}$ and $S^f_{Back}$ are each calculated as the ratio values shown in the following formula 1:

[Formula 1]

$$H_{Edge}/H_{Ever}$$

wherein in the above formula 1,

wherein $H_{Ever}$ represents an average height ($\mu$m) in a region of the insulating layer having a height of 25 $\mu$m or more from the electrode current collector,
wherein $H_{Edge}$ represents the height ($\mu$m) of the point with the highest height from the electrode current collector in a terminal region located on the opposite side of the region where the insulating layer contacts the electrode active material layer of the insulating layer.

For example, the electrode active material layers of the top coating layer and the back coating layer are bilayer structures, respectively.

In one example, the electrode is a positive electrode. Specifically, the electrode is a positive electrode for a secondary battery. The secondary battery is a pouch-type battery. For example, the secondary battery is a pouch-type lithium secondary battery.

[Advantageous Effects]

In the dual slot die coater according to the present disclosure, the width of the upper insulating liquid discharge flow path and the width of the lower insulating liquid discharge flow path are formed differently, thereby preventing the occurrence of a fat-edge at the end of the insulating layer and enabling the formation of a uniform insulating layer.

[Brief Description of the Drawings]

FIG. 1 is a schematic diagram illustrating an electrode manufacturing process according to one embodiment of the present disclosure.
FIG. 2 is a schematic diagram illustrating a top coating process according to one embodiment of the present disclosure.
FIG. 3 is a partial front view illustrating a discharge part of a dual slot die coater according to the conventional art.
FIG. 4 is a partial cross-sectional view of an electrode manufactured using the dual slot die coater according to FIG. 3.
FIG. 5 is a partial front view illustrating a discharge part of a dual slot die coater according to one embodiment of the present disclosure.
FIG. 6 is a partial cross-sectional view of an electrode manufactured using the dual slot die coater according to FIG. 5.
FIG. 7 is a graph showing a thickness profile of an insulating layer of an electrode.

[Best Mode]

The dual slot die coater according to the present disclosure has a structure in which the average widths of the insulating liquid discharge flow paths formed in the upper layer and lower layer are designed to be different. Conventional dual slot die coaters have a structure in which the average widths of the insulating liquid discharge flow paths formed in the upper layer and lower layer are designed to be the same. In the present disclosure, by designing the average width of the insulating liquid discharge flow paths formed in the upper layer and lower layer to be different, such insulating layer fat edge phenomenon can be prevented or reduced. In the process of manufacturing an electrode for a secondary battery, an electrode with a double-sided structure can be manufactured by forming electrode active material layers on a top side and a back side of the electrode current collector. The dual slot die coater according to the present disclosure can be more effectively applied when forming an electrode active material layer on the back side of the electrode current collector.

In one embodiment, the dual slot die coater according to the present disclosure includes a lower block, a middle block, and an upper block; a first coating shim positioned between the lower and middle blocks; and a second coating shim positioned between the middle and upper blocks. The first and second coating shims each include an electrode slurry discharge flow path for discharging an electrode slurry; and an insulating liquid discharge flow path formed on one side or both sides of the electrode slurry discharge flow path with being spaced apart from the electrode slurry discharge flow path by a certain distance, for discharging insulating liquid.

The dual slot die coater satisfies the following condition 1:

[Condition 1]

$$0.2 \leq D2/D1 \leq 0.8$$

wherein in the above condition 1,

D1 represents the average width (mm) of the insulating liquid discharge flow path formed in the first coating shim,
D2 represents the average width (mm) of the insulating liquid discharge flow path formed in the second coating shim.

In the above condition 1, for example, D2 is in a range of 1 mm to 10 mm, in a range of 1 mm to 7 mm, or in a range of 1 mm to 5 mm.

Specifically, the calculated value according to the above condition 1 may be in a range of 0.2 to 0.8, in a range of 0.4 to 0.8, in a range of 0.5 to 0.8, in a range of 0.2 to 0.6, or in a range of 0.4 to 0.6.

In the present disclosure, by controlling the average width of the insulating liquid discharge flow path formed in the second coating shim to the above range, fat edges can be prevented, and the thickness of the insulating layer can be formed more uniformly. For example, it has been found to be more effective to form the average width D2 of the insulating liquid discharge flow path formed in the second coating shim to be shorter than the average width D1 of the insulating liquid discharge flow path formed in the first coating shim.

In the present disclosure, the first and second coating shims satisfy the following condition 2:

[Condition 2]

$$1 \leq |D1\text{-}D2| \leq 10 \ (mm)$$

wherein in the above condition 2,

D1 represents the average width (mm) of the insulating liquid discharge flow path formed in the first coating shim,
D2 represents the average width (mm) of the insulating liquid discharge flow path formed in the second coating shim.

The above condition 2 means that the average widths of the insulating liquid discharge flow paths formed in the first and second coating shims are formed differently from each other. For example, the average width of the insulating liquid discharge flow path formed in the first coating shim may be designed to satisfy the above condition 1 within a range of 2 to 15 mm. In addition, the average width of the insulating liquid discharge flow path formed in the second coating shim is in a range of 1 mm to 10 mm, in a range of 1 mm to 7 mm, or in a range of 1 mm to 5 mm. In this case, it is a structure in which the insulating liquid discharge flow path formed in the first coating shim has an average width that is longer in the lateral direction (Y-axis direction) from the electrode slurry discharge flow path, and the insulating liquid discharge flow path formed in the second coating shim has an average width that is shorter in the lateral direction (Y-axis direction) from the electrode slurry discharge flow path. Moreover, the insulating liquid discharge flow paths formed in the first and second coating shims are formed to overlap on the side close to the electrode slurry discharge flow path (Y-axis direction), and only the insulating liquid discharge flow path formed in the first coating shim is extended and formed on the side far from the electrode slurry discharge flow path.

As another example, the average width of the insulating liquid discharge flow path formed in the first coating shim is in a range of 1 mm to 10 mm, in a range of 1 mm to 7 mm, or in a range of 1 mm to 5 mm. In addition, the average width of the insulating liquid discharge flow path formed in the second coating shim may be designed to satisfy the above condition 1 within a range of 2 mm to 15 mm. In this case, it is a structure in which the average width of the insulating liquid discharge flow path in the first coating shim is formed shorter in the lateral direction (Y-axis direction) from the electrode slurry discharge flow path, and the average width of the insulating liquid discharge flow path in the second coating shim is formed longer in the lateral direction (Y-axis direction) from the electrode slurry discharge flow path. Moreover, the insulating liquid discharge flow paths formed in the first and second coating shims are formed to overlap on the side close to the electrode slurry discharge flow path (Y-axis direction), and only the insulating liquid discharge flow path formed in the second coating shim is extended and formed on the side far from the electrode slurry discharge flow path.

By controlling the average widths of the insulating liquid discharge flow paths formed in the first and second coating shims to satisfy the above range, the formation of fat edges can be minimized.

In the first and second coating shims, each insulating liquid discharge flow path is formed with being spaced apart by a distance D from one side or both sides of the electrode slurry discharge flow path. In a specific example, the distance D is in a range of 1 mm to 5 mm, in a range of 1 mm to 3 mm, in a range of 2 mm to 5 mm, or in a range of 1.5 mm to 2.5 mm. In the present disclosure, in the first and second coating shims, the insulating liquid discharge flow path and the electrode slurry discharge flow path are separated by a certain distance D. The electrode slurry discharged through the electrode slurry discharge flow path forms a sliding region at the end during the coating and drying process. In the region where the sliding region and the insulating liquid discharge region overlap, a thickness increase problem of the layer may occur. In the present disclosure, by separating the electrode slurry discharge flow path and the insulating liquid discharge flow path by a certain distance, such thickness increase problems are prevented.

In addition, the present disclosure provides a method for manufacturing an electrode using the dual slot die coater described above. In one embodiment, the electrode manufacturing method according to the present disclosure includes a top coating step of coating electrode slurry and insulating liquid on one side of a current collector sheet; and a back coating step of coating electrode slurry and insulating liquid on the opposite side of the current collector sheet. One or both of the top coating step and the back coating step include a first layer forming step of discharging a first electrode slurry and a first insulating liquid respectively through a first coating shim onto the current collector sheet; and a second layer forming step of discharging a second electrode slurry and a second insulating liquid respectively through a second coating shim onto the current collector sheet. In addition, the average width D1' of the first insulating layer formed by discharging the first insulating liquid and the average width D2' of the second insulating layer formed by discharging the second insulating liquid are controlled to satisfy the following condition 3:

[Condition 3]

$$0.2 \leq D2'/D1' \leq 0.8$$

wherein in the above condition 3,

D1' represents the average width (mm) of the first insulating layer,
D2' represents the average width (mm) of the second insulating layer.

Specifically, the calculated value according to the above condition 3 may be in a range of 0.2 to 0.8, in a range of 0.4 to 0.8, in a range of 0.5 to 0.8, in a range of 0.2 to 0.6, or in a range of 0.4 to 0.6. For example, the value calculated according to the above condition 3 is 0.5.

Specifically, the electrode manufacturing method according to the present disclosure can be more effectively applied to the back coating step.

In the present disclosure, the electrode active material loading amount can be significantly increased through the first and second electrode slurry discharges. The manufactured electrode is a structure in which a bilayer structure of the electrode active material layer is formed, which can increase the electrode active material loading amount by 30 wt.% or more, 50 wt.% or more, or in a range of 30 wt.% to 100 wt.% compared to an electrode in which the electrode active material layer is a single layer structure.

In the present disclosure, the first layer forming step and the second layer forming step can be performed by a single process. Conventionally, a bilayer structure electrode was manufactured through the process of forming and drying the first layer and then forming and drying the second layer. However, this method involves the problem that the electrode slurry discharging and drying processes have to be performed twice each, and the interface adhesion or interface resistance between the lower layer and the upper layer has to be controlled. In the present disclosure, it is possible to perform the first layer and second layer forming steps as a single process using a dual slot die coater.

Specifically, in the present disclosure, in the first layer forming step, a first electrode slurry is discharged through a first coating shim on the electrode sheet to form a first electrode active material layer, and a first insulating liquid is discharged on both sides of the first electrode slurry discharge region, respectively, to form a first insulating layer. In addition, the second layer forming step discharges a second electrode slurry through a second coating shim on the current collector sheet to form a second electrode active material layer, and discharges a second insulating liquid on both sides of the second electrode slurry discharge region, respectively, to form a second insulating layer. The electrode manufacturing method according to the present disclosure forms two electrode active material layers and two insulating layers based on one side of the current collector sheet, respectively.

In addition, the average width D1' of the first insulating layer formed by discharging the first insulating liquid and the average width D2' of the second insulating layer formed by discharging the second insulating liquid satisfies the following condition 4:

[Condition 4]

$$1 \leq |D1'-D2'| \leq 10 \ (mm)$$

wherein in the condition 4,
D1' represents the average width (mm) of the first insulating layer, and D2' represents the average width (mm) of the second insulating layer.

The above condition 4 means that the average widths of the first and second insulating layers formed by insulating liquid discharged through the first and second insulating liquid discharge flow paths formed in the first and second coating shims, respectively, are formed differently from each other. As one example, the average width D1' of the first insulating layer is the average value of the width of the first insulating layer, and is within a range of 2 to 15 mm satisfying the above condition 4. In addition, the average width D2' of the second insulating layer is the average value of the width of the second insulating layer, and is in a range of 1 mm to 10 mm, a range of 1 mm to 7 mm, or a range of 1 mm to 5 mm. In this case, it is a structure in which the average width of the first insulating layer is formed longer in the lateral direction (Y-axis direction) from the electrode active material layer formed by the electrode slurry discharge flow path, and the average width of the second insulating layer is formed shorter in the lateral direction (Y-axis direction) from the electrode active material layer. Moreover, the first and second insulating layers are formed to overlap on the side close to the electrode active material layer formed by discharging the electrode slurry (Y-axis direction), and only the first insulating layer is extended and formed on the side far from the electrode active material layer.

As another example, the average width of the first insulating layer is in a range of 1 mm to 10 mm, in a range of 1 mm to 7 mm, or in a range of 1 mm to 5 mm. In addition, the average width of the second insulating layer is within a range of 2 mm to 15 mm satisfying condition 4. In this case, it is a structure in which the average width of the first insulating layer is formed shorter in the lateral direction (Y-axis direction) from the electrode active material layer formed by the electrode slurry discharge flow path, and the average width of the second insulating layer is formed longer in the lateral direction (Y-axis direction) from the electrode active material layer. Moreover, the first and second insulating layers are formed to overlap on the side close to the electrode active material layer (Y-axis direction), and only the second insulating layer is extended and formed on the side far from the electrode active material layer.

In one embodiment, the first and second insulating liquids include different compositions. In a specific example, the first insulating liquid, based on solid content, contains 30 wt.% or less inorganic particles. For example, the first insulating liquid has a composition in which the inorganic particle content is in a range of 5 wt.% to 30 wt.%, or does not contain any inorganic particles. In addition, the second insulating liquid comprises, based on solid content, inorganic particles in a range of 30 wt.% to 95 wt.%. For example, the second insulating liquid has an inorganic particle content in a range of 50 wt.% to 95 wt.% or 80 wt.% to 95 wt.%.

As one example of the present disclosure, the first insulating liquid forming the lower insulating layer is a composition with a low content of inorganic particles or does not include inorganic particles. Thereby, the adhesion between the insulating layer and the current collector sheet can be increased. In contrast, the second insulating liquid forming the upper insulating layer is a composition having a relatively high content of inorganic particles. Thereby, thermal shrinkage of the insulating layer can be prevented, and electrical insulating properties can be increased. The present disclosure does not exclude the case where the first and second insulating liquids are formed in the same composition.

In one embodiment, the electrode manufacturing method according to the present disclosure includes a top coating step of coating electrode slurry and insulating liquid on one side of a current collector sheet; and a back coating step of coating electrode slurry and insulating liquid on the opposite side of the current collector sheet. For example, the top coating step and the back coating step each independently include the first layer forming step and the second layer forming step described above. Specifically, in the present disclosure, in the top coating step and/or back coating step, a bilayer structure of electrode active material layer and a bilayer structure of insulating layer can be formed on both sides of the current collector by the method described above.

In addition, the present disclosure provides an electrode manufactured through the manufacturing method described above. Specifically, the electrode is an electrode for a secondary battery. In one embodiment, the electrode according to the present disclosure includes a top coating layer formed on one side of an electrode current collector, comprising a top side electrode active material layer and a top side insulating layer formed in the edge region of the top side electrode active material layer; and a back coating layer formed on the opposite side of the electrode current collector, comprising a backside electrode active material layer and a back side insulating layer formed in the edge region of the back side electrode active material layer. Here, the top side insulating layer has a calculated value according to condition 5 in a range of 1 to 1.15, and the back side insulating layer has a calculated value according to condition 5 in a range of 1.15 to 1.5.

## [Condition 5]

$$H_{Edge}/H_{Ever}$$

In the above condition 5, wherein $H_{Ever}$ represents an average height (μm) in a region of the insulating layer having a height of 25 μm or more from the electrode current collector, and $H_{Edge}$ represents the height (μm) of the point with the highest height from the electrode current collector in a terminal region located on the opposite side of the region where the insulating layer contacts the electrode active material layer of the insulating layer.

In the above condition 5, $H_{Edge}$ represents a height of a fat edge formed in the insulating layer. In addition, if the calculated result according to condition 5 is 1, it means that no fat edge has occurred.

In the present disclosure, the top-side insulating layer of the electrode current collector is controlled to have a relatively low level of fat edge. In addition, the present disclosure has the effect of maximally suppressing the degree of fat edge occurrence in the back side insulating layer of the electrode current collector as well. For example, the top side insulating layer has a calculated value according to condition 5 in a range of 1 to 1.1, and the back side insulating layer has a calculated value according to condition 5 in a range of 1.15 to 1.3.

In one embodiment, in the electrode for the secondary battery according to the present disclosure, the top side insulating layer and the back side insulating layer satisfy the following condition 6.

[Condition 6]

$$0.65 \leq S^f_{Top} / S^f_{Back} \leq 0.95$$

In condition 6, $S^f_{Top}$ represents the coating uniformity of the top side insulating layer, and $S^f_{Back}$ represents the coating uniformity of the back side insulating layer. In addition, $S^f_{Top}$ and $S^f_{Back}$ are each calculated as the ratio values shown in the following formula 1:

[Formula 1]

$$H_{Edge}/H_{Ever}$$

wherein in the above formula 1,

$H_{Ever}$ represents an average height ($\mu$m) in a region of the insulating layer having a height of 25 $\mu$m or more from the electrode current collector,
$H_{Edge}$ represents the height ($\mu$m) of the point with the highest height from the electrode current collector in a terminal region located on the opposite side of the region where the insulating layer contacts the electrode active material layer of the insulating layer.

Conventionally, high levels of fat edges are induced in the back side insulating layer, deteriorating the coating uniformity of the back side insulating layer. This is indicated by an increase in the value of $S^f_{Back}$ in the above condition 6. As a result, problems occur such that the electrode stack structure or the winding structure of the electrode roll is not aligned. The present disclosure significantly reduces the degree of fat edge occurrence in the back side insulating layer. Thereby, alignment defects of the electrode assembly can be resolved while maintaining the thickness of the insulating layer at or above a certain level.

In one embodiment, the electrode active material layers of the top coating layer and the back coating layer each have a bilayer structure. The present disclosure uses a dual slot die coater to manufacture the electrode. Therefore, the electrode according to the present disclosure includes a bilayer structure of electrode active material layer on both sides, that is, both the top coating layer and the back coating layer, based on the current collector. The electrode according to the present disclosure enables high loading to be implemented by including a bilayer structure of electrode active material, and at the same time, excellent safety can be achieved by including a uniform insulating layer.

In one example, the electrode is a positive electrode. Specifically, the electrode is a positive electrode for a lithium secondary battery.

[Mode for practicing the Invention]

Hereinafter, the present disclosure will be described more specifically with reference to the drawings, but the scope of the present disclosure is not limited thereto.

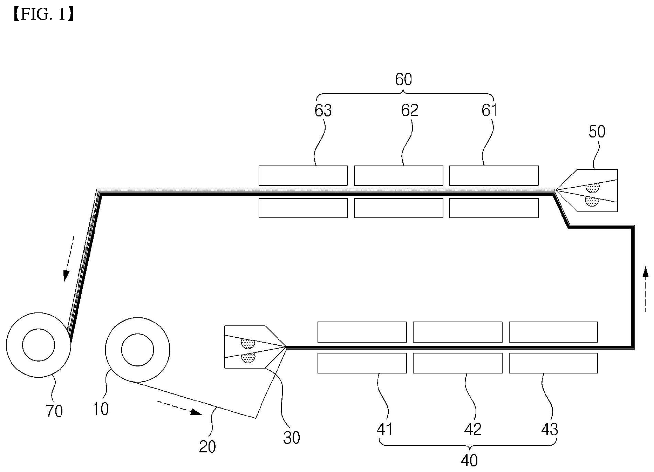

FIG. 1 is a schematic diagram illustrating an electrode manufacturing process according to one embodiment of the present disclosure. Referring to FIG. 1, a current collector 20 base substrate is supplied through an unwinder 10. A top coating step is performed in which an electrode slurry and an insulating liquid are discharged on the upper surface of the current collector 20 through a first dual slot die coater 30. Then, the top-coated current collector 20 is dried through a first heating part 40. The first heating part 40 may comprise a plurality of heaters 41, 42, 43. The current collector 20, which has undergone the top coating and drying process, will undergo a back coating step. An electrode slurry and an insulating liquid are discharged through a second dual slot die coater 50 on the lower surface of the top-coated current collector 20. Then, the back-coated current collector 20 passes through a second heating part 60. The second heating part 60 may comprise a plurality of heaters 61, 62, 63. An electrode base substrate is formed through the top coating and back coating steps, and is wound on a rewinder 70.

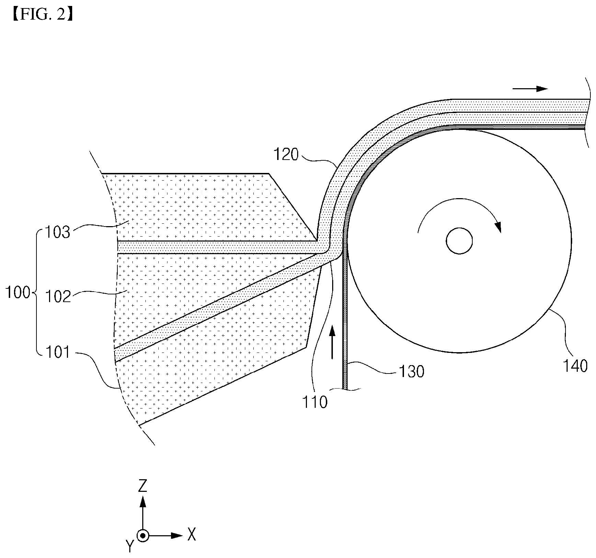

FIG. 2 is a schematic diagram illustrating a top coating process according to one embodiment of the present disclosure. Referring to FIG. 2, a current collector 130 sheet supplied in the Z-axis direction passes over a coating roll 140. A dual slot die coater 100 is used to discharge an electrode slurry and an insulating liquid on the upper surface of the current collector 130 passing over the coating roll 140. The dual slot die coater 100 includes a lower block 101, a middle block 102, and an upper block 103, and a first coating shim is positioned between the lower block 101 and the middle block 102. In addition, a second coating shim is located between the middle block 102 and the upper block 103. Through the slot formed between the lower block 101 and the middle block 102 by the first coating shim, the electrode slurry and the insulating liquid are discharged to form a first layer 110. The electrode slurry and insulating liquid are discharged through the slot formed between the middle block 102 and the upper block 103 by the second coating shim, to form a second layer 120.

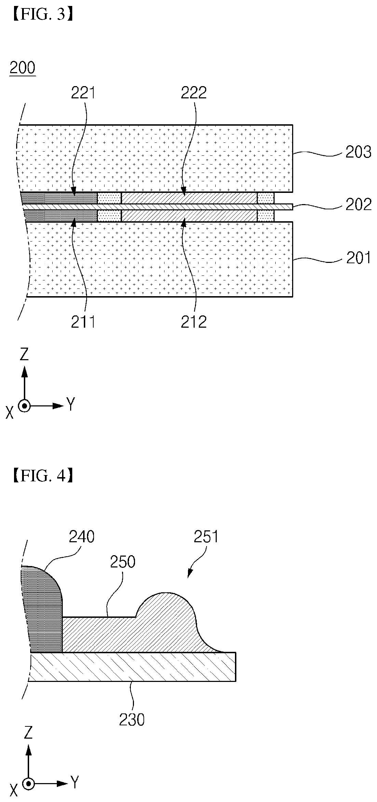

FIG. 3 is a partial front view illustrating a discharge part of a dual slot die coater according to the conventional art. Referring to FIG. 3, a conventional dual slot die coater 200 is a structure including a lower block 201, a middle block 202, and an upper block 203. In addition, a first electrode slurry discharge flow path 211 is formed between the lower block 201 and the middle block 202, and a first insulating liquid discharge flow path 212 is formed on a side of the first electrode slurry discharge flow path 211. In addition, a second electrode slurry discharge flow path 221 is formed between the middle block 202 and the upper block 203, and a second insulating liquid discharge flow path 222 is formed on a side of the second electrode slurry discharge flow path 221. In FIG. 3, the conventional dual slot die coater 200 is a structure in which the first insulating liquid discharge path 212 and the second insulating liquid discharge path 222 are formed with the same width.

When the electrode is manufactured using the dual slot die coater 200 according to FIG. 3, an electrode having a form as shown in FIG. 4 is manufactured. FIG. 4 is a partial cross-sectional view of an electrode manufactured using the dual slot die coater according to FIG. 3. Referring to FIG. 4, the manufactured electrode has a structure in which an electrode active material layer 240 is formed on the current collector 230, and an insulating layer 250 is formed on its side. The end of the insulating layer 250 is in a shape in which a fat edge 251 with a high height is formed.

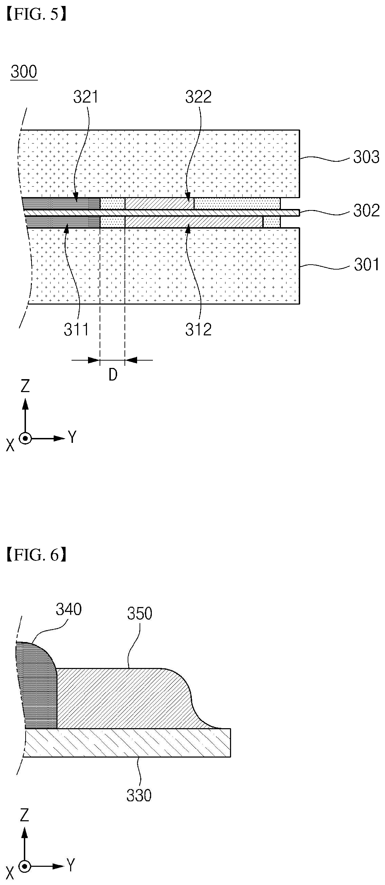

FIG. 5 is a partial front view illustrating a discharge part of a dual slot die coater according to one embodiment of the present disclosure. Referring to FIG. 5, a dual slot die coater 300 according to the present disclosure is a structure including a lower block 301, a middle block 302, and an upper block 303. In addition, a first electrode slurry discharge flow path 311 is formed between the lower block 301 and the middle block 302, and a first insulating liquid discharge flow path 312 is formed on a side of the first electrode slurry discharge flow path 311. In addition, a second electrode slurry discharge flow path 321 is formed between the middle block 302 and the upper block 303, and a second insulating liquid discharge flow path 322 is formed on a side of the second electrode slurry discharge flow path 321. In FIG. 5, the dual slot die coater 300 according to the present disclosure has a width of the first insulating liquid discharge flow path 312 of 4 mm and a width of the second insulating liquid discharge flow path 322 of 2 mm. In addition, the spaces between the first electrode slurry discharge flow path 311 and the first insulating liquid discharge flow path 312, and between the second electrode slurry discharge flow path 321 and the second insulating liquid discharge flow path 322 are each spaced apart by a separation distance D (2 mm).

When the electrode is manufactured using the dual slot die coater 300 according to FIG. 5, an electrode having a form as shown in FIG. 6 is manufactured. FIG. 6 is a partial cross-sectional view of an electrode manufactured using the dual slot die coater according to FIG. 5. Referring to FIG. 6, the manufactured electrode is a structure in which an electrode active material layer 340 is formed on the current collector 330, and an insulating layer 350 is formed on its side. In the electrode according to FIG. 6, a fat-edge is hardly observed at the end of the insulating layer 350.

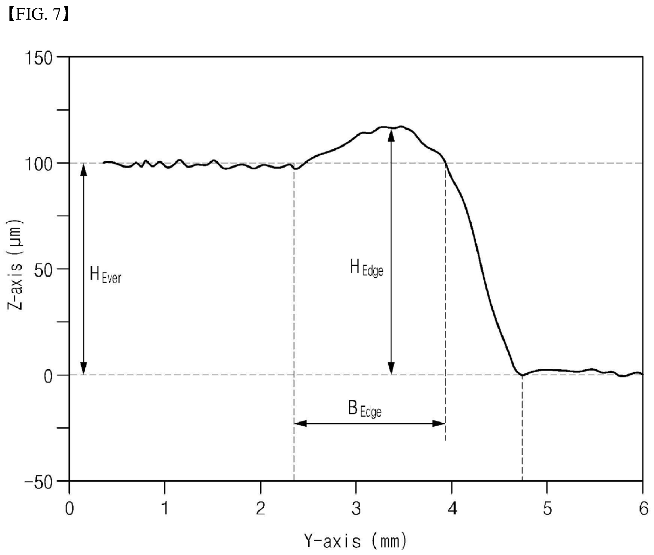

FIG. 7 is a graph showing a thickness profile of an insulating layer of an electrode. Referring to FIG. 7, the insulating layer is in a state in which a flat surface is formed by 2.3 mm in the Y-axis direction, and the average thickness of the flat surface is 100 $\mu$m. After the flat surface, a section in which the thickness of the insulating layer decreases through a thick fat edge section $B_{Edge}$ is identified. In the fat edge section $B_{Edge}$, the maximum height $H_{edge}$ is 120 um. In the present disclosure, the value of $H_{Edge}/H_{Ever}$ is calculated as 1.2.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that the disclosure covers various equivalents, modifications, and substitutions at the time of filing of this application.

[Description of Reference Numerals]

    10: unwinder
    20, 130, 230, 330: current collector
    30: first dual slot die coater
    40: first heating part
    41, 42, 43, 61, 62, 63: heater
    50: second dual slot die coater
    60: second heating part
    70: rewinder
    100, 200, 300: dual slot die coater
    101, 201, 301: lower block
    102, 202, 302: middle block
    103, 203, 303: upper block
    110: first layer
    120: second layer
    140: coating roll
    211, 311: first electrode slurry discharge flow path
    212, 312: first insulating liquid discharge flow path
    221, 321: second electrode slurry discharge flow path
    222, 322: second insulating liquid discharge flow path
    240, 340: electrode active material layer
    250, 350: insulating layer
    251: fat edge of insulating layer
    D: separation distance
    $H_{Edge}$: height of fat edge in insulating layer ($\mu$m)

$H_{Ever}$: average height of flat surface in insulating layer ($\mu$m)

$B_{Edge}$: fat edge section in insulating layer

## Claims

1. A dual slot die coater, comprising:

   a lower block, a middle block, and an upper block;
   a first coating shim positioned between the lower and middle blocks; and
   a second coating shim positioned between the middle and upper blocks.
   wherein the first and second coating shims each comprise an electrode slurry discharge flow path for discharging an electrode slurry; and an insulating liquid discharge flow path for discharging an insulating liquid, formed on one side or both sides of the electrode slurry discharge flow path with being spaced apart from the electrode slurry discharge flow path by a certain distance,
   the dual slot die coater satisfies the following condition 1:

   [Condition 1]

   $$0.2 \leq D2/D1 \leq 0.8$$

   wherein in the above condition 1,
   D1 represents the average width (mm) of the insulating liquid discharge flow path formed in the first coating shim, and
   D2 represents the average width (mm) of the insulating liquid discharge flow path formed in the second coating shim.

2. The dual slot die coater of claim 1, wherein the first and second coating shims satisfy the following condition 2:

   [Condition 2]

   $$1 \leq |D1\text{-}D2| \leq 10 \ (mm)$$

   wherein in the above condition 2,

   D1 represents the average width (mm) of the insulating liquid discharge flow path formed in the first coating shim, and
   D2 represents the average width (mm) of the insulating liquid discharge flow path formed in the second coating shim.

3. The dual slot die coater of claim 2, wherein the average width D2 of the insulating liquid discharge flow path formed in the second coating shim is in a range of 1 mm to 10 mm.

4. The dual slot die coater of claim 1, wherein each insulating liquid discharge flow path formed in the first and second coating shims is formed with being spaced apart by a distance D from one side or both sides of the electrode slurry discharge flow path.

5. The dual slot die coater of claim 4, wherein the distance D is in a range of 1 mm to 5 mm.

6. A method for manufacturing an electrode using a dual slot die coater according to claim 1, comprising:

   a top coating step of coating an electrode slurry and an insulating liquid on one side of a current collector sheet; and
   a back coating step of coating an electrode slurry and an insulating liquid on the opposite side of the current collector sheet,
   wherein at least one of the top coating step and the back coating step, comprising:

   a first layer forming step of discharging a first electrode slurry and a first insulating liquid respectively through a first coating shim on the current collector sheet; and
   a second layer forming step of discharging a second electrode slurry and a second insulating liquid respectively through a second coating shim on the current collector sheet,
   wherein an average width D1' of a first insulating layer formed by discharging the first insulating liquid and an average width D2' of a second insulating layer formed by discharging the second insulating liquid satisfies the following condition 3:

   [Condition 3]

   $$0.2 \leq D2'/D1' \leq 0.8$$

   wherein in the above condition 3,
   D1' represents the average width (mm) of the first insulating layer, and
   D2' represents the average width (mm) of the second insulating layer.

7. The electrode manufacturing method of claim 6, wherein the first layer forming step and the second layer forming step are performed by a single process.

8. The electrode manufacturing method of claim 6, wherein the first layer forming step comprises discharging the first electrode slurry through the first coating shim on the current collector sheet to form a first electrode active material layer, and discharging the first insulating liquid on both sides of a first electrode slurry discharge region, respectively, to form the first insulating layer, and
wherein the second layer forming step comprises discharging the second electrode slurry through the second coating shim on the current collector sheet to form a second electrode active material layer, and discharging the second insulating liquid on both sides of a second electrode slurry discharge region, respectively, to form the second insulating layer.

9.  The electrode manufacturing method of claim 6, wherein the average width D1' of the first insulating layer formed by discharging the first insulating liquid and the average width D2' of the second insulating layer formed by discharging the second insulating liquid satisfies the following condition 4:

[Condition 4]

$$1 \leq |D1'-D2'| \leq 10 \ (\text{mm})$$

wherein in the above condition 4,

D1' represents the average width (mm) of the first insulating layer, and
D2' represents the average width (mm) of the second insulating layer.

10.  The electrode manufacturing method of claim 6, wherein the first insulating liquid, based on solid content, does not comprise inorganic particles or comprises inorganic particles of 30 wt.% or less, wherein the second insulating liquid, based on solid content, comprises inorganic particles in a range of 30 wt.% to 95 wt.%.

11.  An electrode for a secondary battery, comprising:

a top coating layer formed on one side of an electrode current collector, comprising a top side electrode active material layer and a top side insulating layer formed in an edge region of the top side electrode active material layer; and
a back coating layer formed on the opposite one side of the electrode current collector, comprising a back side electrode active material layer and a back side insulating layer formed in an edge region of the back side electrode active material layer,
wherein the top side insulating layer has a calculated value according to the following condition 5 in a range of 1 to 1.15, and the back side insulating layer has a calculated value according to the following condition 5 in a range of 1.15

to 1.5.

[Condition 5]

$$H_{Edge}/H_{Ever}$$

wherein in the above condition 5,

$H_{Ever}$ represents an average height ($\mu$m) in a region of the insulating layer having a height of 25 $\mu$m or more from the electrode current collector,
$H_{Edge}$ represents the height ($\mu$m) of the point with the highest height from the electrode current collector in a terminal region located on the opposite side of the region where the insulating layer contacts the electrode active material layer of the insulating layer.

12.  The electrode for the secondary battery of claim 11, wherein the top side electrode active material layer and the back side electrode active material layer are bilayer structures, respectively.

13.  The electrode for the secondary battery of claim 11, wherein the secondary battery is a pouch-type battery.

14.  The electrode for the secondary battery of claim 11, wherein the electrode is a positive electrode.

【FIG. 1】

【FIG. 2】

【FIG. 3】

200

221　　　222

203

202

201

211　　　212

Z
↑
X ⊙ → Y

【FIG. 4】

240　　250　　251

230

Z
↑
X ⊙ → Y

【FIG. 5】

300

321    322

303

302

301

311    312

D

Z
X ⊙ → Y

【FIG. 6】

340    350

330

Z
X ⊙ → Y

【FIG. 7】

## INTERNATIONAL SEARCH REPORT

| International application No. |
| --- |
| **PCT/KR2024/017383** |

| A. | CLASSIFICATION OF SUBJECT MATTER |
| --- | --- |

**B05C 5/02**(2006.01)i; **B05C 11/10**(2006.01)i; **H01M 4/04**(2006.01)i; **H01M 10/42**(2006.01)i

According to International Patent Classification (IPC) or to both national classification and IPC

| B. | FIELDS SEARCHED |
| --- | --- |

Minimum documentation searched (classification system followed by classification symbols)

B05C 5/02(2006.01); B05D 1/26(2006.01); B32B 37/12(2006.01); B32B 41/00(2006.01); H01M 4/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬롯 다이 코터(slot die coater), 블록(block), 심(shim), 폭(width), 높이(height)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 6159544 A (LIU et al.) 12 December 2000 (2000-12-12)<br>See column 4, line 39 - column 5, line 54 and figure 1. | 1-14 |
| A | US 2019-0374971 A1 (HITACHI AUTOMOTIVE SYSTEMS, LTD.) 12 December 2019 (2019-12-12)<br>See paragraphs [0035]-[0036] and [0039] and figures 3-4. | 1-14 |
| A | EP 3747652 A2 (ORIGIN COMPANY, LIMITED) 09 December 2020 (2020-12-09)<br>See figures 5A-5B. | 1-14 |
| A | KR 10-2022-0037394 A (LG ENERGY SOLUTION, LTD.) 24 March 2022 (2022-03-24)<br>See figure 7. | 1-14 |
| A | KR 10-2017-0126463 A (TORAY ENGINEERING COMPANY, LIMITED) 17 November 2017 (2017-11-17)<br>See paragraph [0023] and figure 1. | 1-14 |

| ☐ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **25 February 2025** | **25 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/017383**

| Patent document cited in search report | | | Publication date (day/month/year) | Patent family member(s) | | | Publication date (day/month/year) |
|---|---|---|---|---|---|---|---|
| US | 6159544 | A | 12 December 2000 | None | | | |
| US | 2019-0374971 | A1 | 12 December 2019 | CN | 110198792 | A | 03 September 2019 |
| | | | | CN | 110198792 | B | 26 October 2021 |
| | | | | EP | 3578272 | A1 | 11 December 2019 |
| | | | | EP | 3578272 | B1 | 28 August 2024 |
| | | | | EP | 3578272 | B8 | 04 December 2024 |
| | | | | JP | 6794473 | B2 | 02 December 2020 |
| | | | | US | 11642692 | B2 | 09 May 2023 |
| | | | | US | 11850627 | B2 | 26 December 2023 |
| | | | | US | 2022-0062944 | A1 | 03 March 2022 |
| | | | | US | 2024-0066547 | A1 | 29 February 2024 |
| | | | | WO | 2018-143342 | A1 | 09 August 2018 |
| EP | 3747652 | A2 | 09 December 2020 | CN | 111744722 | A | 09 October 2020 |
| | | | | CN | 111744722 | B | 04 January 2022 |
| | | | | EP | 3747652 | A3 | 03 March 2021 |
| | | | | EP | 3747652 | B1 | 05 January 2022 |
| | | | | JP | 2020-201324 | A | 17 December 2020 |
| | | | | JP | 6580807 | B1 | 25 September 2019 |
| | | | | TW | 202045342 | A | 16 December 2020 |
| | | | | TW | I764162 | B | 11 May 2022 |
| KR | 10-2022-0037394 | A | 24 March 2022 | CN | 115516659 | A | 23 December 2022 |
| | | | | EP | 4148815 | A1 | 15 March 2023 |
| | | | | US | 2024-0050975 | A1 | 15 February 2024 |
| | | | | WO | 2022-060177 | A1 | 24 March 2022 |
| KR | 10-2017-0126463 | A | 17 November 2017 | CN | 107112496 | A | 29 August 2017 |
| | | | | CN | 107112496 | B | 07 July 2020 |
| | | | | JP | 2016-167337 | A | 15 September 2016 |
| | | | | JP | 6539069 | B2 | 03 July 2019 |
| | | | | US | 2018-0345310 | A1 | 06 December 2018 |
| | | | | WO | 2016-143511 | A1 | 15 September 2016 |

Form PCT/ISA/210 (patent family annex) (July 2022)

**EP 4 768 137 A1**

**Patent documents cited in the description**

- KR 1020230154675